(19) Europäisches Patentamt

European Patent Office

Office européen des brevets

(11) **EP 0 549 910 B1**

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int. Cl.$^6$: **A61C 1/05**

(21) Anmeldenummer: **92120578.7**

(22) Anmeldetag: **02.12.1992**

(54) **Geschwindigkeitsstellmittel einer Dentalturbine**

Dental turbine with speed regulator

Régulateur de vitesse d'une turbine dentale

(84) Benannte Vertragsstaaten:
**AT CH DE DK FR IT LI**

(30) Priorität: **17.12.1991 DE 4141673**

(43) Veröffentlichungstag der Anmeldung:
**07.07.1993 Patentblatt 1993/27**

(73) Patentinhaber: **SIEMENS AKTIENGESELLSCHAFT D-80333 München (DE)**

(72) Erfinder:
• **Franetzki, Manfred, Dr.-Ing., Dipl.-Phys. W-6140 Bensheim (DE)**
• **Wohlgemuth, Jürgen, Dipl.-Ing. W-6100 Darmstadt (DE)**

(56) Entgegenhaltungen:
**EP-A- 0 283 417     US-A- 3 775 851**
**US-A- 4 015 489     US-A- 4 723 911**

## Beschreibung

Eine Dentalturbine, bei der wie im Oberbegriff von Anspruch 1 angegeben, zur Regelung der Drehzahl Stellmittel vorgesehen sind, ist aus der US-A-3 775 851 bekannt.

Um unterschiedlichen Präparationen in der zahnärztlichen Praxis gerecht zu werden, werden heute hauptsächlich zwei Antriebsarten eingesetzt, Turbinenantriebe mit sehr hohen Leerlaufdrehzahlen (über 300.000 $min^{-1}$) und Elektro- oder Luftmotore mit demgegenüber niedrigeren Drehzahlen (bis max. ca. 200.000 $min^{-1}$).

Dentalturbinen haben den Vorteil des relativ einfachen Aufbaues und der einfachen Versorgung, sind allerdings mit den Nachteilen einer relativ geringen Bohrleistung und einer zu hohen Leerlaufdrehzahl, die bei Belastung durch ein äußeres Moment M stark absinkt, behaftet. Ebenfalls Folge der zu hohen Drehzahl ist ein relativ hoher Verschleiß und die Gefahr des Verbrennens von Zahnsubstanz.

Elektro- bzw. Luftmotorantriebe liefern zwar ausreichende Drehmomente und Bohrleistungen; die optimalen Drehzahlen (180 - 200.000 $min^{-1}$) werden allerdings nur mit erheblichem technischem Aufwand (viele schnell bewegte Teile) bei entsprechend hohem Verschleiß, relativ großem Gewicht und relativ hohen Kosten erreicht.

Diese unterschiedlichen Eigenschaften bedingen, daß der Zahnarzt heute in der Regel beide Antriebe an einer Behandlungseinheit benötigt.

Um bei Dentalturbinen ein Absinken der Drehzahl bei Belastung zu vermeiden, wurde schon vorgeschlagen, die Drehzahl lastunabhängig konstant zu halten. Bei einer bekannten solchen regelbaren Turbine (US-PS 3 865 505) ist im Zuleitungskanal der Antriebsdruckluft ein Ventil angeordnet, welches in Abhängigkeit vom Volumendurchsatz der Rückluft gesteuert wird. Sinkt durch ein äußeres Moment (Belastung) die Drehzahl der Turbine, so wird das Ventil im Zuleitungskanal geöffnet und dadurch ein größeres Luftvolumen zur Turbine geleitet. Die von der Rückluft abhängige Regelung des Zuluftstromes kann bei der bekannten Turbine auf verschiedene Weise erfolgen, u.a. über einen federbelasteten Schieber im Rückluftkanal, der das Ventil im Zuluftkanal steuert oder über eine im Rückluftkanal angeordnete Membran-Druckdose, die einen den Durchfluß in der Zuleitung steuernden Kolben verstellt.

Die bekannte Turbine ist u.a. mit dem Nachteil behaftet, daß zur Drosselung des gesamten Luftstromes relativ große Kräfte erforderlich sind, die sich im Abluftkanal nur unter Einsatz von Volumen und Masse aufbringen lassen. Damit wird aber ein instabiles Regelverhalten der Turbine geschaffen. Des weiteren bedingt die bekannte Anordnung einen relativ großen Aufbau innerhalb des Turbinenhandstückes, wodurch es zu Einbauproblemen kommen kann.

Aus der US-PS 3 775 851 ist ein zahnärztliches Handstück mit Druckluftantrieb bekannt, bei dem die Drehzahl ebenfalls durch Änderung des Volumendurchsatzes der Rückluft gesteuert werden kann. Hierzu ist am schlauchseitigen Ende des Handstückes ein von Hand verstellbarer Stellring angeordnet, mit dem der Querschnitt der austretenden Rückluft verändert werden kann. Das Handstück ist ferner noch mit Mitteln zur Drehrichtungsumkehr versehen. Hierzu kann ein mit der Druckluftzuleitung verbundener Zapfen, der die auf die Laufradschaufeln gerichtete Luftaustrittsdüse beinhaltet, gegenüber dem Laufradgehäuse gedreht werden, so daß die Luftaustrittsdüse einerseits auf die Vorderseiten und andererseits auf die Rückseiten der Laufradschaufeln gerichtet werden kann. Ein selbsttätiges Regeln der Drehzahl ist bei diesem Handstück nicht möglich.

Der im Anspruch 1 angegebenen Erfindung liegt die Aufgabe zugrunde, eine drehzahlgeregelte Dentalturbine anzugeben, die die positiven Eigenschaften einerseits einer Turbine und andererseits eines Motorantriebs in sich vereint und die Nachteile der bekannten regelbaren Dentalturbinen vermeidet.

Ein wesentliches Kennzeichen der Regelung gemäß Patentanspruch 1 ist, daß der Volumenstrom des Antriebsfluids im wesentlichen konstant bleibt, so daß also weder in der Zuleitung noch in der Abluftleitung eine den Durchfluß des Fluides wesentlich beeinflussende Drosselstelle vorhanden ist. Alternativ oder auch in Kombination hierzu kann, gemäß Patentanspruch 2 in unmittelbarer Nähe der Schaufelflächen des Laufrades ein biegeelastisches Teil angeordnet sein, welches mit einer Prallfläche versehen ist, auf die ein am Laufrad abgelenkter Volumenstrom in seiner Wirkung drehzahlabhängig gerichtet ist.

Nachdem als Antriebsfluid heute in der Regel Druckluft zur Anwendung kommt, wird im folgenden stets dieses Medium angesprochen. obgleich es im Rahmen der Erfindung liegt, auch ein anderes geeignetes Antriebsmedium zu verwenden.

Die Drehzahlregelung kann selbstregelnd oder auch mit Hilfe eines Sensors über einen Soll-Istvergleich erfolgen. Bei der zuletzt genannten Regelung wird die Drehzahl (n) des Laufrades mit einem geeigneten Sensor erfaßt und die momentane Drehzahl in einem Regler mit einem eingestellten Sollwert ($n_s$) verglichen. Bei Abweichung beeinflußt der Regler über einen Stellantrieb später noch näher beschriebene Stellmittel, die den Volumenstrom des Treibluftstrahls, der aus der Düse austritt und auf das Laufrad auftrifft, so, daß eine Drehzahlabweichung bis zur maximal möglichen Belastung $P_{max}$ möglichst konstant bzw. sehr klein bleibt.

Die Regelung der Drehzahl auf einen Sollwert der gewünschten optimalen Drehzahl geschieht vorteilhafterweise auf folgende Weise:
Die Turbine wird, ähnlich wie bekannt, mit dem Antriebsfluid angeströmt und in Rotation versetzt. Der antreibende Strahl wird erst in unmittelbarer Nähe des Laufrades der Turbine verändert. Die unmittelbare Nähe deshalb, um Totzeiten klein zu halten und den Einfluß der Kompressibilität der Luft und evtl. von elastischen Zuleitungen auszuschalten, was zu instabilem Regelverhalten oder zu verzögertem Einstellen auf Bohrer-Laständerungen führen würde.

Die Beeinflussung des Volumenstromes kann erfolgen

a) durch variable Strahlführung, die mehr oder weniger stark auf die Turbinenschaufeln gerichtet ist,
b) durch variables Bremsen der Turbinenschaufeln oder
c) durch eine Kombination aus den genannten Varianten a und b.

Die Strahlführung kann vorteilhafterweise mittels einer Ablenkfahne zwischen Düsenöffnung und Laufrad mittels eines Strahlteilers im Bereich der Düsenaustrittsöffnung, durch axiale Verschiebung des Laufrades oder durch Änderung der Düsenposition relativ zum Laufrad variiert werden.

Die Drehzahlmessung kann erfolgen:

a) optisch, z.B. durch Erfassen einer Markierung auf dem Turbinenrad,

b) induktiv, z.B. durch Messung der Spannung, die durch auf dem Turbinenrad befestigte Magnete in einer außen angeordneten Spule induziert wird,

c) kapazitiv, z.B. durch Messung der Kapazitätsänderung eines durch die vorbeilaufenden Turbinenschaufeln und festen Gegenelektroden gebildeten Kondensators,

d) strömungstechnisch, z.B. durch Messung von Strömungsänderungen des an den Turbinenschaufeln abgelenkten Treibluftstrahls.

Auch andere, hier nicht ausdrücklich genannte Verfahren der Drehzahlmessung sind im Rahmen der Erfindung möglich.

Die Regelung kann, wie bereits angesprochen,

-   indirekt, elektronisch in Verbindung mit elektromagnetischen, piezoelektrischen oder anderen Stellantrieben oder

-   direkt, mechanisch oder strömungsmechanisch unter Ausnutzung belastungsabhängiger Kräfte im Antriebssystem der Turbine oder auch

-   aus einer Kombination von beiden

erfolgen.

Nachfolgend werden ein Regelungsprinzip sowie mehrere konstruktive Ausführungsbeispiele einer regelbaren Turbine nach der Erfindung beschrieben.
Es zeigen:

Figur 1 eine vereinfachte Darstellung eines Regelungsprinzips,

Figur 2 zwei das Regelverhalten der Erfindung gegenüber dem Stand der Technik aufzeigende Kennlinien,

Figuren 3 bis 15 mehrere Ausführungsformen einer regelbaren Turbine nach der Erfindung,

Figur 16 ein Ausführungsbeispiel eines elektrischen Sensors nach der Erfindung.

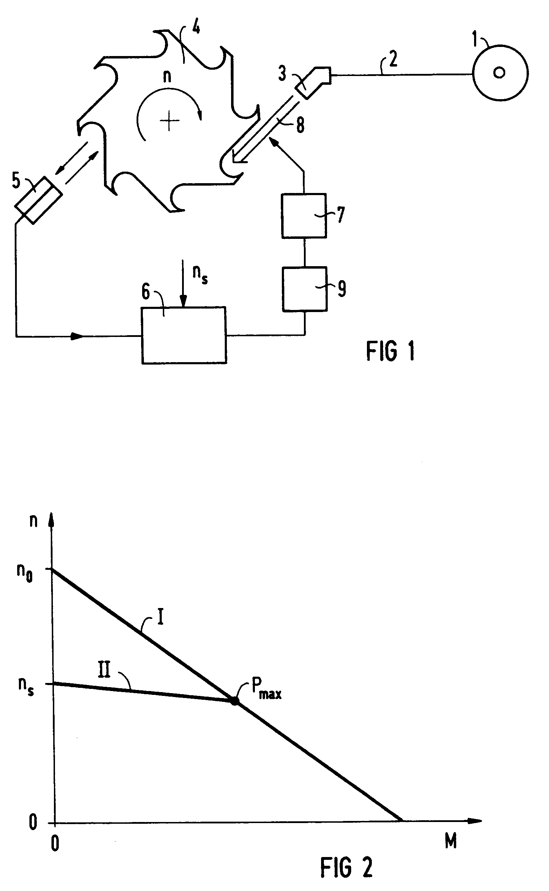

Die Figur 1 zeigt in einer vereinfachten Prinzipdarstellung eine Regelanordnung für eine indirekte Regelung der Drehzahl unter Einbeziehung eines Sensors und eines Reglers mit Soll-/Istwertvergleich.

Ein nicht dargestelltes, in bekannter Weise aufgebautes zahnärztliches Turbinenhandstück enthält eine Turbine, die aus einer Versorgungsquelle 1 über eine Leitung 2 mit einem geeigneten Fluid angetrieben wird. Nachdem Druckluft heute das üblicherweise verwendete Antriebsmedium ist, wird im folgenden stets von diesem ausgegangen. Denkbar und im Rahmen der Erfindung liegt es aber auch, ein anderes geeignetes Antriebsmedium zu verwenden.

Die aus einer Düse 3 ausströmende Luft beaufschlagt in an sich bekannter Weise direkt die Schaufeln des Turbinenlaufrades 4.

Bei der hier vorgestellten geregelten Turbine wird die Drehzahl des Laufrades 4 mit einem geeigneten Sensor 5 erfaßt. In einem Regler 6 wird die momentane Drehzahl mit einem stellbaren Sollwert $n_s$ verglichen. Bei Abweichung aktiviert der Regler 6 ei nen Stellantrieb 9 für allgemein mit 7 bezeichnete, in der nachfolgenden Ausführungsbeispielen näher erläuterte Stellmittel 7, welche den durch Pfeil 8 angedeuteten, auf das Laufrad 4 gerichteten Treibluftstrahl (Volumenstrom) beeinflussen, und zwar derart, daß die Drehzahlabweichung bis zu einer maximal möglichen Belastung ($P_{max}$) möglichst klein bleibt. Zweckmäßigerweise liegt der eingestellte Sollwert bei der optimalen Arbeitsdrehzahl der Turbine. Mit Hilfe der Stellmittel 7, von denen mehrere vorteilhafte Varianten in den nachfolgenden Ausführungsbeispielen vorgestellt werden, ist es möglich, die Drehzahl über eien relativ großen Belastungsbereich annähernd konstant zu halten.

Die Figur 2 zeigt anhand der Kennlinien einerseits einer ungeregelten Turbine nach dem Stand der Technik (Kennlinie I) und einer geregelten Turbine nach der Erfindung (Kennlinie II) diese Konstanz sehr deutlich.

Nachfolgend werden mehrere Ausführungsbeispiele einer regelbaren Turbine gemäß der Erfindung beschrieben.

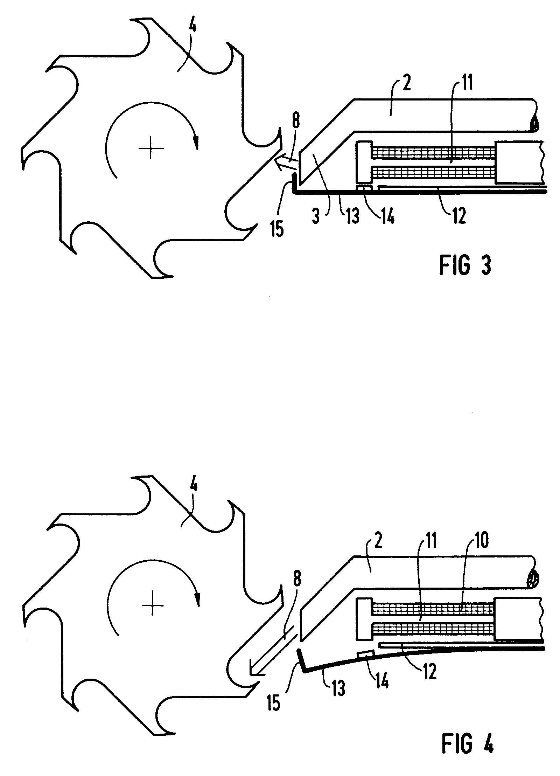

## Ausführungsbeispiel 1 (Figuren 3 und 4)

Um die Leerlaufdrehzahl auf das gewünschte Maß einzustellen, kann die Wirkung des Luftstromes 8 aus der Düse 3 auf das Laufrad 4 durch ein elektromagnetisches System aus Magnetspule 10 mit Weicheisenkern 11, Weicheisenrückschluß 12 und einem an einer Biegefeder 13 angeordneten Ankerblech 14 dadurch beeinflußt werden, daß ein als Ablenkfahne 15 zu bezeichnender abgewinkelter Abschnitt der Biegefeder 13 zwischen Düsenöffnung und Laufrad 4 gezogen wird.

Die Figur 3 zeigt die eine Endstellung der Ablenkfahne 15 bei voll aktivierter Spule, bei der sich die gewünschte Leerlaufdrehzahl durch partielle Abschattung der Düsenöffnung 3 und Ablenkung des austretenden Luftstrahls 8 einstellt.

Die Figur 4 zeigt die andere Endstellung der Ablenkfahne 15 bei maximaler Belastung ($P_{max}$) der Turbine. Der Spulenstrom ist abgeschaltet. Durch die Federkraft der Biegefeder 13 wird die Ablenkfahne 15 von der Düsenöffnung zurückgezogen.

Der Antriebsstrahl ist hier optimal, d.h. mit höchstem Wirkungsgrad auf das Laufrad gerichtet.

Für die Drehzahlregelung zwischen Leerlauf und maximaler Belastung ($P_{max}$) können verschiedene Spulenansteuerungen Gewählt werden. So kann vorteilhafterweise die Ablenkfahne 15 analog über einen veränderlichen Spulenstrom gegen die Rückstellkraft der Biegefeder 13 mehr oder weniger weit vor die Düsenöffnung gezogen werden. Alternativ ist es denkbar, die Ablenkfahne 15 digital zwischen den beschriebenen beiden Endpositionen mit einer festen Taktfrequenz (z.B. 200 Hz) hin- und herzubewegen. Die Regelung kann hierbei durch Veränderung des Taktverhältnisses erfolgen.

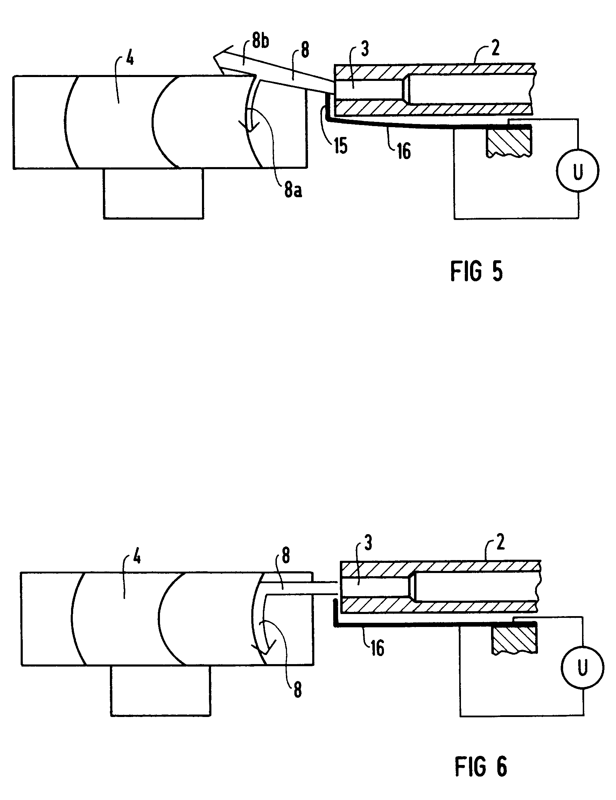

**Ausführungsbeispiel 2 (Figuren 5 und 6)**

Ähnlich wie im Beispiel 1 wird die Strahlführung ebenfalls durch eine Ablenkfahne 15 beeinflußt. Anders als im Beispiel 1 wird hier jedoch der Anteil des Luftstromes 8, der das Laufrad 4 trifft, verändert. Während in der einen Endstellung (Fig. 5), die einer gewünschten Leerlaufdrehzahl entspricht, nur der Anteil 8a wirksam auf die Schaufeln des Laufrades gerichtet ist, der Restanteil 8b dagegen weitgehend nicht genutzt wird, trifft in der anderen Endstellung (Fig. 6), die der Drehzahl bei maximaler Belastung entspricht, der volle Luftstrom 8 auf das Schaufelrad.

Als Stellantrieb für die Ablenkfahne 15 kommt ein piezoelektrischer Biegebalken 16 zur Anwendung, der sich unter dem Einfluß einer angelegten elektrischen Spannung (U) so biegt, daß sich die Position der Ablenkfahne 15 im Luftstrahl verändert. Zwischen den beiden Endpositionen für Leerlauf und Vollast ($P_{max}$) kann die Ansteuerspannung U, wie der Spulenstrom in Beispiel 1, analog oder digital variiert werden.

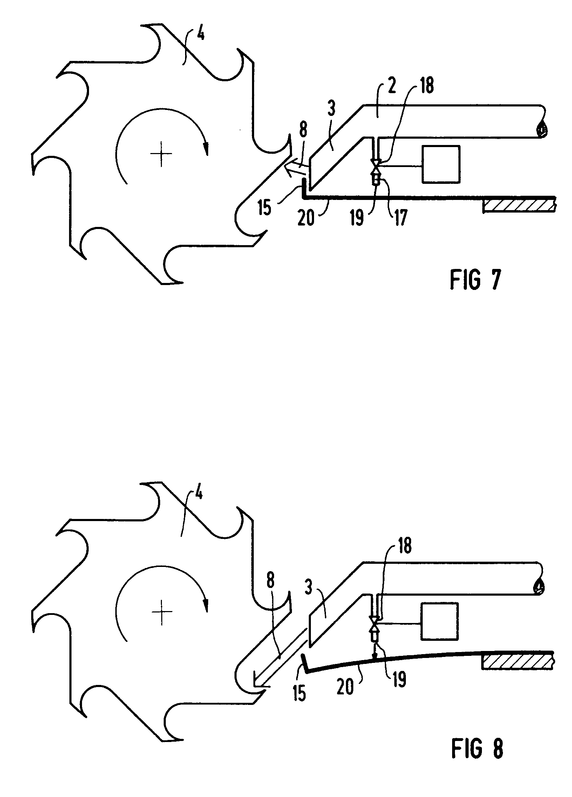

**Ausführungsbeispiel 3 (Figuren 7 und 8)**

Dieses Ausführungsbeispiel zeigt eine Möglichkeit auf, den Platzbedarf für das erforderliche, elektrisch angesteuerte Stellelement in einem Turbinenhandstück zu reduzieren. Bei diesem Beispiel zweigt von der Zuleitung 2 eine Leitung 17 ab, in der als Stellantrieb ein Ventil 18 angeordnet ist. Die Austrittsdüse 19 der Abzweigleitung 17 ist auf eine Blattfeder 20 gerichtet.

Der Luftstrahl 8 aus der Austrittsdüse 3 wird durch die an der Blattfeder 20 befestigte Ablenkfahne 15, ähnlich wie schon anhand des Beispieles 1 beschrieben, beeinflußt. Das Ventil 18 kann zweckmäßigerweise ein Magnetventil sein, das gemäß Figur 1 vom Regler 6 aktiviert wird.

Während in Figur 7 die Düse 19 durch das Ventil 18 geschlossen ist, ist das Ventil in der Darstellung nach Figur 8 geöffnet. Der aus der Düse 19 strömende Luftstrahl drückt die Blattfeder 20 und damit die Ablenkfahne 15 aus dem Luftstrahl der Austrittsdüse 3.

Da der benötigte Hilfsluftstrom und damit der Hilfsdüsenquerschnitt relativ klein ist, kann entsprechend auch das erforderliche Magnetventil 18 klein gehalten werden.

Analog zum erläuterten Beispiel 1 und 2 kann der Hilfsluftstrom aber auch mit einem elektromagnetischen oder piezoelektrischen Stellantrieb mit Ablenkfahne zwischen Hilfsdüsenöffnung und Blattfeder beeinflußt werden.

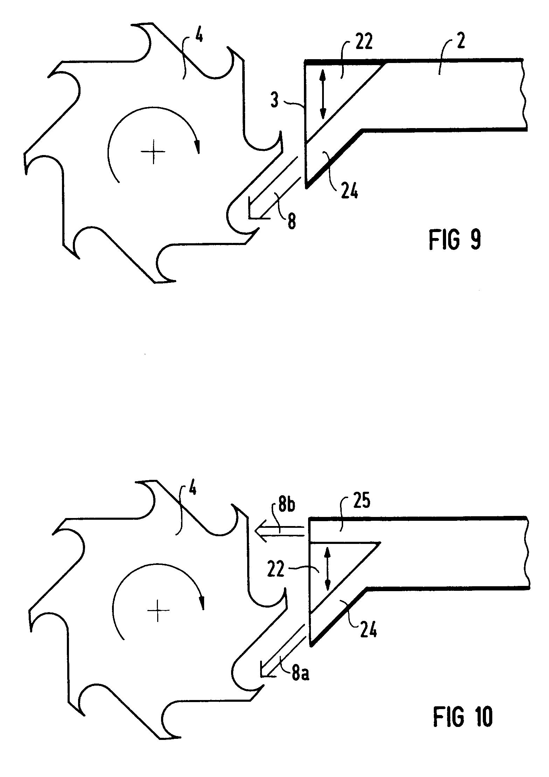

**Ausführungsbeispiel 4 (Figuren 9 und 10)**

Bei dieser Ausführung ist in der Luftaustrittsdüse 3 ein Strahlteiler 22 vorgesehen. Mittels des Strahlteilers 22 kann der Querschnitt der Austrittsdüsenöffnung so verändert werden, daß entweder der gesamte Volumenstrom 8 durch die Austrittsöffnung 24 geleitet wird (Fig. 9) oder daß der Volumenstrom 8 in veränderbare Teilströme (8a, 8b) unterteilt wird, von denen der eine Teilstrom (8a) als Antriebsstrom und der andere, der über eine sich bei Verstellung bildende Düsenöffnung 25 austritt, als Bremsstrom wirkt (Fig. 10).

Figur 9 zeigt also den zur Querschnittsveränderung der Düsenöffnungen 24, 25 beweglichen Strahlteiler 22 in der einen Endstellung, in der die Antriebsdüse 24 den maximal möglichen Querschnitt hat. Die Bremsdüse 25 ist dabei ganz geschlossen (Vollaststellung $P_{max}$).

Figur 10 zeigt den Strahlteiler 22 in der anderen Endposition. Der Antriebsdüsenquerschnitt 24 ist hier reduziert, die Bremsdüse 25 dagegen geöffnet (Leerlaufstellung).

Als Stellantriebe für den Strahlteiler 22 können die in Beispiel 1 bis 3 beschriebenen Systeme vorgesehen werden.

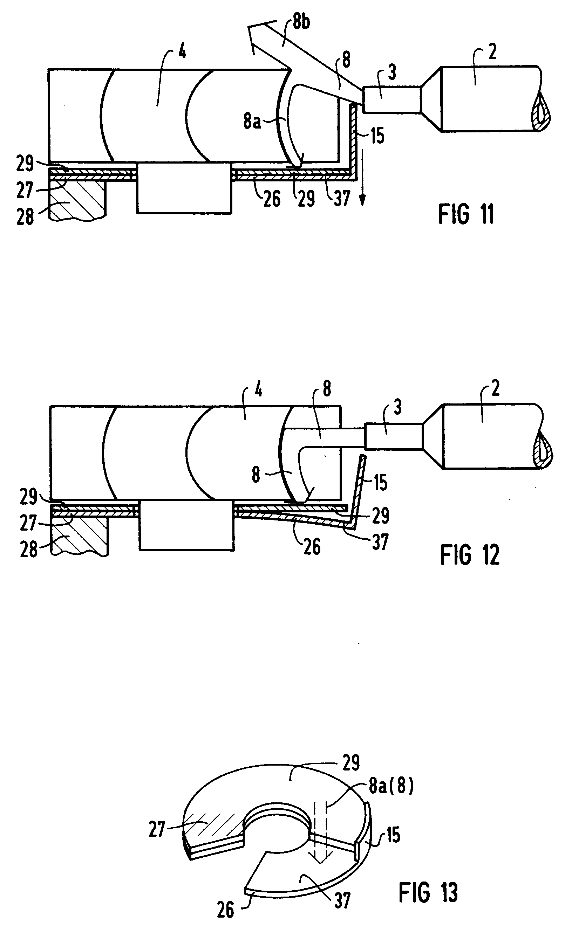

**Ausführungsbeispiel 5 (Figuren 11 bis 13)**

Dieses Ausführungsbeispiel zeigt eine mögliche Ausführung einer selbstregelnden Turbine auf.

Die als Stellmittel zur Veränderung der Wirkung des Volumenstromes wirkende Ablenkfahne 15 befindet sich an einer kreisringförmigen Biegefeder 26, die konzentrisch unterhalb des Laufrades 4 an einem Träger 28 angeordnet ist und als Stellantrieb für die Ablenkfahne 15 dient.

Figur 11 zeigt, wie der Luftstrom 8 von der Ablenkfahne 15 abgelenkt und in Teilluftströme 8a, 8b unterteilt wird. Im Leerlauf bietet das Laufrad 4 keinen nennenswerter Strömungswiderstand und läuft frei mit der noch auftreffenden Strömung um. Die Leerlaufdrehzahl wird, wie in Beispiel 3, durch den Eingriff der Ablenkfahne 15 in die Strahlführung der Treibluft auf das gewünschte Maß reduziert.

Wird das Laufrad durch ein äußeres Moment (Belastung) abgebremst, erhöht sich damit der Strömungswiderstand an den Laufradschaufeln und der Luftstrahl wird an den Schaufelflächen abgelenkt. Die abgelenkte Luft trifft auf eine Prallfläche 37 der Biegefeder 26 auf, wodurch letztere nach unten auslenkt und damit die Ablenkfahne 15 aus dem Treibluftstrom gezogen wird.

Je stärker das Bremsmoment an der Turbine ist, desto stärker ist auch die Kraft der abgelenkten Luft auf die Biegefeder 26 und desto mehr wird auch die Ablenkfahne 15 aus dem Treibluftstrahl gezogen. Figur 12 zeigt wieder die Endstellung bei Vollast ($P_{max}$). Die Treibluftdüse 3 ist hier völlig frei, wodurch der Treibluftstrahl 8 optimal auf das Laufrad 4 gerichtet ist.

Zur Beeinflussung, insbesondere Verbesserung der Regelcharakteristik kann die Kennlinie und/oder die Federcharakteristik der oben erwähnten Biegefeder verändert werden. Die Kennlinie kann dabei durch entsprechende Gestaltung des Strahlablenkteils oder auch der Düsenaustrittsöffnung verändert werden. Die Düsenöffnung kann z.B. einen vom Kreisquerschnitt abweichenden Querschnitt erhalten. Zur Unterdrückung von Regelschwingungen kann die Biegefeder auch mit geeigneten Dämpfungselementen gekoppelt sein.

Eine Möglichkeit der Gestaltung der Biegefeder 26 ist in Figur 13 gezeigt. Die Biegefeder bildet hier nur einen Ausschnitt eines Kreisringes und ist nur in dem mit 27 bezeichneten schraffierten Bereich an einem entsprechend ausgebildeten Träger 28 (Turbinengehäuse) eingespannt.

Zur Verbesserung der Regelcharakteristik kann zwischen dem Schaufelrad 4 und der Biegefeder eine Teilscheibe 29 angeordnet sein. Eine solche Teilscheibe dient als Abschirmung vor einem sich eventuell einstellenden Saugeffekt zwischen Schaufelrad und Biegefeder in diesem Bereich.

Zur Veränderung der Federcharakteristik kann die Biegefeder 26 mit einem Dämpfungselement versehen sein, indem z.B. auf die Feder eine schwingungsdämpfende Folie od. dgl. aufgebracht wird.

Losgelöst von den bisher beschriebenen Ausführungen, bei denen der Volumenstrom für den Drehzahlregelvorgang praktisch konstant bleibt, bietet das anhand des Ausführungsbeispieles 5 erläuterte Prinzip, den am Laufrad abgelenkten Luftstrom auf die Prallfläche eines Stellantriebs oder Stellgliedes zu lenken, und zwar in seiner Wirkung drehzahlabhängig zu lenken, die Möglichkeit, damit den Volumenstrom durch z.B. eine in der Zufuhrleitung angeordnete Drossel oder dergleichen zu steuern.

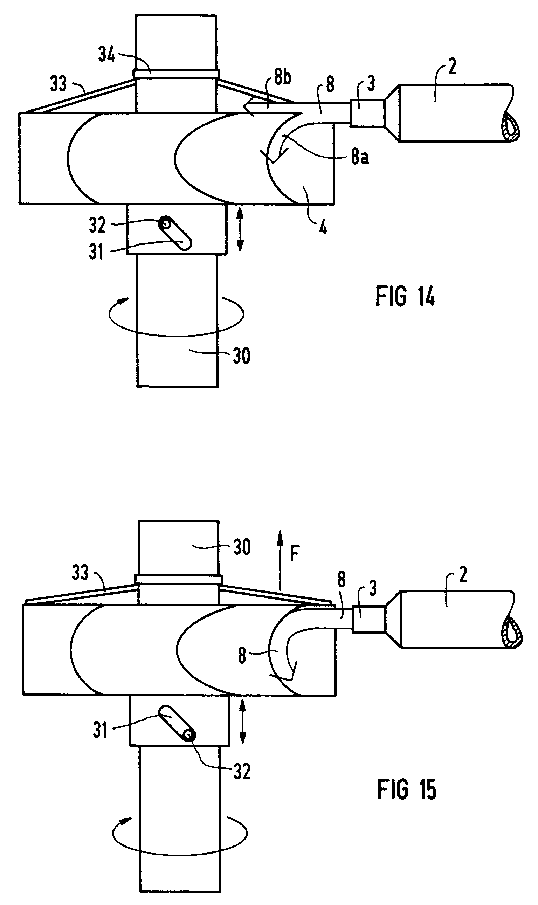

## Ausführungsbeispiel 6 (Figuren 14 und 15)

Eine weitere Ausführung einer sich selbst regelnden Turbine ist in den Figuren 14 und 15 dargestellt.

Das Laufrad 4 sitzt frei beweglich auf der mit 30 bezeichneten Welle. Das Bewegungsspiel wird begrenzt durch eine schräge Nut 31 im Laufradbund und einen in der Nut geführten, mit der Welle fest verbundenen Mitnehmerzapfen 32. Eine konzentrisch über dem Laufrad angeordnete Tellerfeder 33, die sich an einem Wellenbund 34 abstützt, drückt das Laufrad axial nach unten.

Die Figur 14 zeigt, wie das Laufrad im Leerlauf von der Feder in die unterste Endstellung gedrückt wird, wodurch der Antriebsluftstrahl 8 aus der Düse 3 in Teilströme 8a und 8b aufgeteilt wird, wobei der Teilstrom 8b z.T. wirkungslos über das Laufrad hinwegströmt. Im Leerlauf bieten die Laufwerksschaufeln keinen Strömungswiderstand und laufen mit der restlichen auftreffenden Luftströmung 8a bei reduzierter Drehzahl frei um.

Die Figur 15 zeigt die Laufradposition bei maximaler Last ($P_{max}$) an der Antriebswelle. Die Schaufeln des Laufrades werden hier mit dem vollen Antriebsluftstrahl 8 beaufschlagt.

Wird die Welle 30 durch ein äußeres Drehmoment abgebremst, dann wird dieses Moment über den Mitnehmerzapfen 32 in der Welle und die schräge Nut 31 im Laufradbund auf das Laufrad übertragen. Über die schiefe Ebene der Nut wird dabei das Laufrad gegen die Kraft der Feder 33 nach oben gedrückt. Damit vergrößert sich auch die Angriffsfläche des Luftstrahls auf die Laufradschaufel und das Bremsmoment wird durch ein erhöhtes Antriebsmoment kompensiert.

Zusätzlich wird beim Abbremsen des Laufrades der Strömungswiderstand an der Laufradschaufel erhöht und der Luftstrahl an den gekrümmten Schaufelwänden nach unten abgelenkt. Dabei entsteht an der angestrahlten oberen Schaufelhälfte eine nach oben gerichtete Reaktionskraft F, die die zuvor beschriebene Verschiebung des Laufrades nach oben unterstützt.

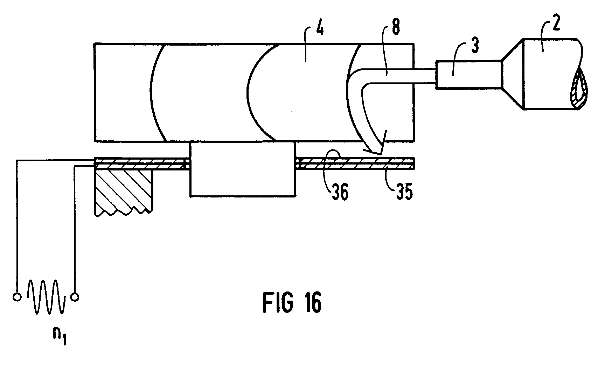

## Ausführungsbeispiel 7 (Figur 16)

Die Figur 16 zeigt eine besonders für die zuletzt beschriebenen Ausführungsformen gut geeignete Variante eines Sensors zur Erfassung der Turbinendrehzahl.

Bei dieser Variante ist unterhalb des Laufrades 4 konzentrisch zur Laufradachse ein ringförmiges piezoelektrisches Biegeelement 35 angeordnet, auf dessen Prallfläche 36 der Treibluftstrahl 8 bzw. ein Teilstrom 8a nach Durchströmen der Laufradschaufel auftrifft und einen elektrischen Impuls erzeugt. Die so entstehende Impulsfolge mit der Frequenz $n_1$ ist der Turbinendrehzahl n nach der Beziehung

$$n_1 = Nn$$

direkt proportional.

Dabei ist Nn die Anzahl der Turbinenschaufeln.

Mit einem solchen Sensor läßt sich die Turbinendrehzahl auf sehr einfache Weise erfassen.

**Patentansprüche**

1. Drehzahlgeregelte Dentalturbine, bei der zur Regelung der Drehzahl Stellmittel (7) vorgesehen sind, dadurch gekennzeichnet, daß die Stellmittel in der Öffnung der Antriebsdüse (3) oder zwischen Antriebsdüse (3) und Laufrad (4) angeordnet sind oder durch Mittel zum axialen Verschieben des Laufrades (4) gebildet werden, und welche die Wirkung eines im wesentlichen konstanten Volumenstromes des Antriebsfluids auf das Laufrad (4) verändern.

2. Drehzahlgeregelte Dentalturbine, dadurch gekennzeichnet, daß zur Regelung der Drehzahl in unmittelbarer Nähe der Schaufelflächen des Laufrades (4) ein biegeelastisches Teil (26, 35) angeordnet ist, welches mit einer Prallfläche (36, 37) versehen ist, auf die ein am Laufrad (4) abgelenkter Volumenstrom (8, 8a) des Antriebsfluids in seiner Wirkung drehzahlabhängig gerichtet ist.

3. Dentalturbine nach Anspruch 1 oder 2, bei der die Stellmittel (7) den auf das Laufrad (4) gerichteten Volumenstrom (8) in veränderbare Teilströme (8a, 8b) aufteilen, wobei ein Teilstrom (8a) als Antriebsstrom wirkt.

4. Dentalturbine nach Anspruch 3, bei der der andere Teilstrom (8b) als Bremsstrom wirkt.

5. Dentalturbine nach einem der Ansprüche 1 bis 4, bei der die Stellmittel (7) die Anströmrichtung des Volumenstromes (8) auf das Laufrad (4) ändern.

6. Dentalturbine nach Anspruch 5, bei der die Stellmittel (7) die Stellung der Antriebsdüse (3) ändern.

7. Dentalturbine nach einem der Ansprüche 2 bis 6, bei der die Stellmittel (7) einen zwischen Laufrad (4) und Austrittsdüse (3) des Volumenstromes (8) oder in der Öffnung der Austrittsdüse (3) selbst verstellbar angeordneten Strahlteiler (15, 22) enthalten, der den freien Antriebsstrahl in die Teilströme (8a, 8b) unterteilt.

8. Dentalturbine nach Anspruch 7, bei der der Strahlteiler als Strahlablenkteil (15) ausgebildet ist, welches den Antriebsstrahl aus seiner durch die Austrittsdüse (3) vorgegebenen Richtung ganz oder teilweise ablenkt.

9. Dentalturbine nach einem der Ansprüche 1 bis 8, bei der ein biegeelastisches Teil (13, 20, 26) vorgesehen ist, welches ein abgewinkeltes, als Stellmittel (7) wirkendes Ende (15) aufweist, welches in den Antriebsstrahl zwischen Austrittsdüse (3) und Laufrad (4) einführbar ist.

10. Dentalturbine nach einem der Ansprüche 1 bis 9, bei der den Stellmitteln (7) ein elektromagnetischer, piezoelektrischer oder magnetostriktiver Stellantrieb (9, 11 bis 13; 16) zugeordnet ist.

11. Dentalturbine nach einem der Ansprüche 1 bis 9, bei der den Stellmitteln (7) ein pneumatischer Stellantrieb (9,18, 19) zugeordnet ist.

12. Dentalturbine nach Anspruch 9 und 11, bei der von der Zuleitung (2) des Antriebsfluids eine mit ihrer Austrittsdüse (19) auf das biegeelastische Teil (20) gerichtete Leitung (17) abzweigt, in der ein steuerbares Ventil (18) angeordnet ist.

13. Dentalturbine nach einem der Ansprüche 1 bis 11, bei der die Stellmittel (7) die Position des Laufrades (4) in Achsrichtung der Welle (30) ändern.

14. Dentalturbine nach Anspruch 13, bei der die Stellmittel (7) die Position des Laufrades (4) selbsttätig in Abhängigkeit vom Lastmoment an der Antriebswelle (30) des Laufrades (4) ändern.

15. Dentalturbine nach Anspruch 14, bei der die Verstellung des Laufrades (4) direkt durch den auf das Laufrad (4) gerichteten Antriebsstrahl (8) erfolgt, indem die Laufradschaufelflächen schräg zur Strahlrichtung derart orientiert sind, daß außer der in Laufrichtung des Laufrades wirkenden Antriebskraft auch eine axial wirkende Stellkraft (F) erzeugt wird, welche das axial zur Welle (30) des Laufrades gegen ein Federelement (33) verschiebbare Laufrad (4) belastungsabhängig in seiner Position zur Austrittsdüse (3) verändert.

16. Dentalturbine nach Anspruch 14, bei der bei Belastungsänderung am Antriebssystem die Vestellung direkt durch das vom Laufrad (4) auf die Antriebswelle (30) übertragene Drehmoment erfolgt, indem über einen elastisch wirkenden Verstellmechanismus (31 bis 33) zwischen Laufrad (4) und Welle (30) die Position des Laufrades im Antriebsstrahl verändert wird.

17. Dentalturbine nach Anspruch 16, bei der der Verstellmechanismus (31 bis 33) zwischen Laufrad (4) und Antriebswelle (30) durch miteinander korrespondierende Führungsflächen (Nut 31 und Zapfen 32) gebildet wird, von denen mindestens eine eine gewendelte Fläche zur gemeinsamen Achse bildet, wobei die sich so ergebende Führung durch Anschläge begrenzt ist und bei der ferner ein Federelement (33) als Rückstellelement für die vom Drehmoment erzeugte Bewegung vorgesehen ist.

**18.** Dentalturbine nachh einem der Ansprüche 1 bis 17, bei der in unmittelbarer Nähe des Laufrades (4) ein dessen Drehzahl erfassender Sensor (5) vorhanden ist, der eine der Istdrehzahl des Laufrades entsprechende Größe liefert, die mit einer der Solldrehzahl entsprechenden Größe verglichen wird, wobei bei Abweichungen ein Aktivierungssignal an einen Stellantrieb (9) zur Verstellung der Stellmittel (7) gegeben wird.

**19.** Dentalturbine nach Anspruch 18, bei der ein Drehzahlsensor (5) vorgesehen ist, der den drehzahlabhängigen, an den Schaufeln des Laufrades (4) abgelenkten Volumenstrom (8a) mißt.

**20.** Dentalturbine nach Anspruch 19, bei der als Drehzahlsensor (5) ein piezoelektrisches Element (35) vorgesehen ist, welches eine Prallfläche (36) aufweist, an der durch die Strömung von jeder am Sensor vorbeilaufenden Laufradschaufel ein elektrisches, der Drehzahl (n) proportionales Signal ($n_1$) erzeugt wird.

**21.** Dentalturbine nach einem der Ansprüche 9 bis 20, bei der zur Verbesserung der Regelcharakteristik das biegeelastische Teil (13, 20, 26) mit Mitteln zur Schwingungsdämpfung versehen ist.

**22.** Dentalturbine nach einem der Ansprüche 1 bis 21, bei dem die Teile (5, 6, 7, 9) für die Drehzahlregelung innerhalb eines die Turbine aufnehmenden Handstückes angeordnet sind.

**Claims**

**1.** Speed-regulated dental turbine, where actuating means (7) are provided to regulate the speed, characterized in that the actuating means are arranged in the opening of the driving nozzle (3) or between the driving nozzle (3) and the turbine wheel (4) or are formed by means for the axial displacement of the turbine wheel (4), and they change the action of a substantially constant volume stream of the drive fluid on to the turbine wheel (4).

**2.** Speed-regulated dental turbine, characterized in that to regulate the speed there is arranged in the immediate vicinity of the blade surfaces of the turbine wheel (4) a flexible part (26, 35) which is provided with a rebounding surface (36, 37), to which a volume stream (8, 8a) of the drive fluid, deflected on the turbine wheel (4), is directed such that its action is dependent on speed.

**3.** Dental turbine according to claim 1 or 2, where the actuating means (7) divide the volume stream (8) directed to the turbine wheel (4) into variable sub-streams (8a, 8b), with a sub-stream (8a) acting as drive stream.

**4.** Dental turbine according to claim 3, where the other sub-stream (8b) acts as a braking stream.

**5.** Dental turbine according to one of claims 1 to 4, where the actuating means (7) change the stream direction of the volume stream (8) to the turbine wheel (4).

**6.** Dental turbine according to claim 5, where the actuating means (7) change the position of the driving nozzle (3).

**7.** Dental turbine according to one of claims 2 to 6, where the actuating means (7) contain a stream divider (15, 22) adjustably arranged between the turbine wheel (4) and the outlet nozzle (3) of the volume stream (8) or in the opening of the outlet nozzle (3) itself, the stream divider separating the free drive stream into the sub-streams (8a, 8b).

**8.** Dental turbine according to claim 7, where the stream divider is constructed as a stream deflecting part (15) which entirely or partially deflects the drive stream from its direction specified by the outlet nozzle (3).

**9.** Dental turbine according to one of claims 1 to 8, where a flexible part (13, 20, 26) is provided, which has a bent end (15) acting as actuating means (7), which end can be introduced into the drive stream between the outlet nozzle (3) and the turbine wheel (4).

**10.** Dental turbine according to one of claims 1 to 9, where there is associated with the actuating means (7) an electromagnetic, piezoelectrical or magnetostrictive actuating drive (9, 11 to 13; 16).

**11.** Dental turbine according to one of claims 1 to 9, where a pneumatic actuating drive (9, 18, 19) is associated with the actuating means (7).

**12.** Dental turbine according to claim 9 and 11, where a line (17) directed with its outlet nozzle (19) to the flexible part (20) branches from the supply line (2) of the drive fluid, in which line (17) a controllable valve (18) is arranged.

**13.** Dental turbine according to one of claims 1 to 11, where the actuating means (7) change the position of the turbine wheel (4) in the axial direction of the shaft (30).

**14.** Dental turbine according to claim 13, where the actuating means (7) change the position of the turbine wheel (4) automatically in dependence upon the load torque at the drive shaft (30) of the turbine wheel (4).

**15.** Dental turbine according to claim 14, where the adjustment of the turbine wheel (4) takes place directly by way of the drive stream (8) directed to the turbine wheel (4), in that the blade surfaces of the turbine wheel are orientated inclined to the direction of the stream in such a way that, besides the driving force acting in the running direction of the turbine wheel, an axially acting actuating force (F) is also generated, which changes the position of the turbine wheel (4) with respect to the outlet nozzle (3) in load-dependent manner, which turbine wheel can be displaced axially to the shaft (30) of the turbine wheel against a spring element (33).

**16.** Dental turbine according to claim 14, where with load change on the drive system the adjustment takes place directly by way of the torque transmitted by the turbine wheel (4) to the drive shaft (30), in that by way of an elastically acting adjusting mechanism (31 to 33) between the turbine wheel (4) and the shaft (30) the position of the turbine wheel in the drive stream is changed.

**17.** Dental turbine according to claim 16, where the adjusting mechanism (31 to 33) between the turbine wheel (4) and the drive shaft (30) is formed by guide surfaces (groove 31 and lug 32) which correspond with each other, at least one of which forms a spiralled surface to the common axis, with the guide thus resulting being limited by stops, and where, moreover, a spring element (33) is provided as resetting element for the movement generated by the torque.

**18.** Dental turbine according to one of claims 1 to 17, where in the immediate vicinity of the turbine wheel (4) there is a sensor (5) which detects its speed, the sensor supplying a quantity corresponding to the actual speed of the turbine wheel, which quantity is compared with a quantity corresponding to the desired speed, whereby in the event of deviations an activation signal is delivered to an actuating drive (9) to adjust the actuating means (7).

**19.** Dental turbine according to claim 18, where a speed sensor (5) is provided, which measures the speed-dependent volume stream (8a) deflected at the blades of the turbine wheel (4).

**20.** Dental turbine according to claim 19, where a piezoelectrical element (35) is provided as speed sensor (5), which element has a rebounding surface (36) on which an electrical signal ($n_1$) proportional to the speed (n) is generated by means of the stream of each blade of the turbine wheel which passes the sensor.

**21.** Dental turbine according to one of claims 9 to 20, where to improve the control characteristic the flexible part (13, 20, 26) is provided with means for vibration absorption.

**22.** Dental turbine according to one of claims 1 to 21, where the parts (5, 6, 7, 9) for the speed regulation are arranged within a handpiece which accommodates the turbine.

**Revendications**

**1.** Turbine dentaire, dont la vitesse de rotation est réglée et dans laquelle des moyens de réglage (7) sont prévus pour le réglage de la vitesse de rotation, caractérisée par le fait que les moyens de réglage sont disposés dans l'ouverture de le buse d'entraînement (3) ou entre la buse d'entraînement (3) et le rotor (4), ou sont formés par des moyens permettant de déplacer axialement le rotor (4) et qui modifient l'action d'un courant volumique essentiellement constant du fluide d'entraînement sur le rotor (4).

**2.** Turbine dentaire, dont la vitesse de rotation est réglée, caractérisée par le fait que pour la régulation de la vitesse de rotation, il est prévu à proximité immédiate des surfaces des aubes du rotor (4), une partie (26,35) flexible élastiquement et qui est pourvue d'une surface d'impact (36,37), sur laquelle un courant volumique (8, 8a) du fluide d'entraînement, dévié au niveau du rotor (4), est dirigé, avec une action dépendant de la vitesse de rotation.

**3.** Turbine dentaire suivant la revendication 1 ou 2, dans laquelle les moyens de réglage (7) répartissent le courant volumique (8) dirigé sur le rotor (4), en des courants partiels variables (8a,8b), un courant partiel (8a) agissant en tant que courant d'entraînement.

**4.** Turbine dentaire suivant la revendication 3, dans laquelle l'autre courant partiel (8b) agit en tant que courant de freinage.

**5.** Turbine dentaire suivant l'une des revendications 1 à 4, dans laquelle les moyens de réglage (7) modifient la direction d'affluence du courant volumique (8) sur le rotor (4).

**6.** Turbine dentaire suivant la revendication 5, dans laquelle les moyens de réglage (7) modifient la position de la buse d'entraînement (3).

**7.** Turbine dentaire suivant l'une des revendications 2 à 6, dans laquelle les moyens de réglage (7) contiennent un diviseur de jet (15,22), qui est disposé de manière à être réglable entre le rotor (4) et la buse de sortie (3) du courant volumique (8) ou dans l'ouverture de la buse de sortie (3), et qui divise le jet libre d'entraînement en les courants partiels (8a,8b).

**8.** Turbine dentaire suivant la revendication 7, dans laquelle le diviseur de jet est agencé sous la forme d'un élément de déviation de jet (15), qui dévie en totalité ou partiellement le jet d'entraînement à partir de sa direction donnée à l'avance par la buse de sortie (3).

**9.** Turbine dentaire suivant l'une des revendications 1 à 8, dans laquelle il est prévu une partie flexible élastiquement (13,20,26), qui possède une extrémité coudée (15), agissant en tant que moyen de réglage (7) et qui peut être introduite dans le jet d'entraînement entre la buse de sortie (3) et le rotor (4).

**10.** Turbine dentaire suivant l'une des revendications 1 à 9, dans laquelle un dispositif d'entraînement de réglage électromagnétique, piézoélectrique ou magnétostrictif (9,11 à 13;16) est associé aux moyens de réglage (7).

**11.** Turbine dentaire suivant l'une des revendications 1 à 9, dans laquelle un dispositif d'entraînement de réglage pneumatique (9,18,19) est associé aux moyens de réglage (7).

**12.** Turbine dentaire suivant la revendication 9 ou 11, dans laquelle de la canalisation d'amenée (2) du fluide d'entraînement s'étend en dérivation une canalisation (17), qui est dirigée, au moyen de sa buse de sortie (19), vers la partie flexible élastiquement (20) et dans laquelle est disposée une vanne (18) qui peut être commandée.

**13.** Turbine dentaire suivant l'une des revendications 1 à 11, dans laquelle les moyens de réglage (7) modifient la position du rotor (4) dans la direction de l'axe de l'arbre (30).

**14.** Turbine dentaire suivant la revendication 13, dans laquelle les moyens de réglage (7) modifient la position du rotor (4) automatiquement en fonction du couple de charge appliqué à l'arbre d'entraînement (30) du rotor (4).

**15.** Turbine dentaire suivant la revendication 14, dans laquelle le réglage du rotor (4) s'effectue directement par le jet d'entraînement (8) dirigé sur le rotor (4), par le fait que les surfaces des aubes du rotor sont orientées obliquement par rapport à la direction du jet de telle sorte qu'en plus de la force d'entraînement qui agit dans le sens de rotation du rotor, il apparaît également une force de réglage (F) axiale qui modifie, en fonction de la charge, la position, par rapport à la buse de sortie (3), du rotor (4), qui peut coulisser axialement par rapport à l'arbre (30) du rotor à l'encontre d'un élément élastique (33).

**16.** Turbine dentaire suivant la revendication 14, dans laquelle, lors d'une modification de la charge dans le système d'entraînement, le réglage s'effectue directement par le couple qui est transmis par le rotor (4) à l'arbre d'entraînement (30), par le fait que la position du rotor dans le jet d'entraînement est modifiée par l'intermédiaire d'un mécanisme de réglage (31 à 33), qui agit élastiquement, entre le rotor (4) et l'arbre (3).

**17.** Turbine dentaire suivant la revendication 16, dans laquelle le mécanisme de réglage (31 à 33) présent entre le rotor (4) et l'arbre d'entraînement (30) est formé par des surfaces de guidage (rainure 31 et languette 32), qui se correspondent mutuellement et dont l'une au moins forme une surface disposée en hélice par rapport à l'axe commun, le guidage ainsi obtenu étant limité par des butées, et dans laquelle en outre un élément élastique (33) est prévu comme un élément de rappel pour le déplacement produit par le couple.

**18.** Turbine dentaire suivant l'une des revendications 1 à 17, dans laquelle à proximité immédiate du rotor (4) est disposé un capteur (5) qui détecte la vitesse de rotation du rotor et fournit une grandeur qui correspond à la vitesse de rotation réelle du rotor et qui est comparée à une grandeur correspondant à la vitesse de rotation de consigne, un signal d'activation étant appliqué à un dispositif d'entraînement de réglage (9) pour déplacer les moyens de réglage (7), dans le cas d'écarts.

**19.** Turbine dentaire suivant la revendication 18, dans laquelle il est prévu un capteur (5) de la vitesse de rotation, qui mesure le courant volumique (8a), qui dépend de la vitesse de rotation et est dévié au niveau des aubes du rotor (4).

**20.** Turbine dentaire suivant la revendication 19, dans laquelle il est prévu comme capteur (5) de la vitesse de rotation, un élément piézoélectrique (35), qui possède une surface d'impact (36), sur laquelle un signal électrique ($n_1$) proportionnel à la vitesse de rotation (n) est produit sous l'effet de l'écoulement, par chaque aube du rotor passant devant le capteur.

**21.** Turbine dentaire suivant l'une des revendications 9 à 20, pour améliorer la caractéristique de régulation, la partie flexible élastiquement (13,20,26) comporte des moyens pour amortir les vibrations.

**22.** Turbine dentaire suivant l'une des revendications 1 à 21, dans laquelle les parties (5,6,7,9) pour la régulation de la vitesse de rotation sont disposées à l'intérieur d'une pièce à main recevant la turbine.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16